# EUROPÄISCHE PATENTSCHRIFT

(11) **EP 1 412 101 B1**
(45) Veröffentlichungstag und Bekanntmachung des Hinweises auf die Patenterteilung: **10.10.2007**
(21) Anmeldenummer: 02758443.2
(22) Anmeldetag: 07.08.2002
(51) Int. Cl.: B05D 7/24, B29C 49/06, B29C 49/24, B29C 45/17, B29C 45/00, B05D 7/22, C23C 16/44

(54) **VERFAHREN UND VORRICHTUNG ZUM GLEICHZEITIGEN BESCHICHTEN UND FORMEN EINES KÖRPERS**
METHOD AND DEVICE FOR THE SIMULTANEOUS COATING AND MOULDING OF A BODY
PROCEDE ET DISPOSITIF PERMETTANT SIMULTANEMENT DE MOULER UN CORPS ET DE FORMER UN REVETEMENT SUR CE CORPS

(30) Priorität: 07.08.2001 DE 10138696
(43) Veröffentlichungstag der Anmeldung: 28.04.2004
(73) Patentinhaber: Schott AG, 55122 Mainz (DE)
(72) Erfinder: BEHLE, Stephan, 55278 Hahnheim (DE); KUHR, Markus, 55597 Wöllstein (DE); WALTHER, Marten, 55270 Engelstadt (DE); WOLFF, Detlef, 55129 Mainz (DE); BICKER, Matthias, 55126 Mainz (DE)
(74) Vertreter: Herden, Andreas F.
(86) Internationale Anmeldenummer: PCT/EP2002/008851
(87) Internationale Veröffentlichungsnummer: WO 2003/013738

(56) Entgegenhaltungen:
- EP-A- 1 029 648
- WO-A-99/17334
- DE-A- 19 502 103
- PATENT ABSTRACTS OF JAPAN Bd. 0113, Nr. 52 (M-643), 18. November 1987 (1987-11-18) & JP 62 130823 A (HONDA MOTOR CO LTD), 13. Juni 1987 (1987-06-13)

## Beschreibung

Die Erfindung betrifft ein Verfahren sowie eine Vorrichtung zum Beschichten und Formen eines Körpers gemäß Anspruch 1 bzw. Anspruch 16.

Um im Bereich von Kunststoffverpackungen für eine Reduktion der Permeation von Gasen und Flüssigkeiten zu sorgen sowie das Kunststoffmaterial gegen chemische Angriffe oder UV-Strahlung zu schützen, ist es vorteilhaft, Substratmaterialien, insbesondere dreidimensoinale Hohlkörper, mit einer Beschichtung insbesondere Barrierebeschichtung zu versehen. Durch Beschichtungen können mit kostengünstigen Massenkunststoffen dieselben Eigenschaft wie bei teuren Spezialkunststoffen erreichen und den Ersatz von beispielsweise Glas im Bereich der Pharmaverpackungen durch derartige Massenkunststoffe ermöglichen. Aufbringen von Beschichtungen auf ein Kunststoffsubstrat sind aus nachfolgenden Anmeldungen bekanntgeworden:
US 5,798,139
US 5,833,752
US 6,001,429
WO 99/17334

Die US 5,798,139 beschreibt die Herstellung von Plastikbehältern mit einer Kohlenstoffilmbeschichtung. Der Kohlenstoffilm soll eine Gasbarriere darstellen und das Problem der Sorption aus dem Kunststoffmaterial lösen.

Aus der US 5,833,752 ist ein System bekanntgeworden, bei dem die Barrierebeschichtung aus einem Plasma aufgebracht wird. Die Energie zur Aufrechterhaltung des Plasmas wird durch Einrichtungen aufgebracht, die sich dadurch auszeichnen, daß die Energie in das Innere der zu beschichtenden Behältern über eine Außenelektrode eingebracht wird.

Aus der US 6,001,429 ist wiederum das Aufbringen einer Sperrschicht auf die Innenfläche eines Kunststoffsubstrates bekanntgeworden, wobei HMDSO als Monomer-Gas zusammen mit einem Sauerstoffträger-Gas in das Innere des zu beschichtenden Artikels geleitet wird.

Aus der WO 99/17334 ist ein Verfahren zur Innen- bzw. Außenbeschichtung bekanntgeworden, bei dem eine Beschichtungsvorrichtung zur Beschichtung eines Kunststoffbehälters mit einer Streckblasvorrichtung kombiniert wurde. Die Beschichtung erfolgt dabei nach Evakuieren des in einer Form gebildeten Kunststoffbehälters und der den Kunststoffbehälter umschließenden Form durch Zünden eines Plasmas im Inneren des von der Form umschlossenen Kunststoffbehälters. Nachteilig an der aus der WO 99/17334 bekannten Vorrichtung ist, daß mit der aus der WO 99/17334 bekannten Vorrichtung keine Körper beliebiger Form hergestellt werden konnten.

Aufgabe der Erfindung ist es somit, ein Verfahren und eine Vorrichtung anzugeben, mit dem Körper beliebiger Form hergestellt werden können.

Erfindungsgemäß wird die Aufgabe durch ein Verfahren gelöst, bei dem je zwei Formhälften eines Formwerkzeuges zur Formung eines Körpers zusammengefahren und zur Anlage gebracht werden, wobei die Formhälften vorzugsweise durch einen spannungsfesten Überzug elektrisch voneinander isoliert sind. In die zusammengefahrenen Formhälften wird ein Spritzgut eingeleitet, so daß ein Formkörper entsteht.

Um eine gleichzeitige Außenbeschichtung auf dem Formkörper bzw. die Formkörper aufzubringen, werden die Formhälften einen vorbestimmten Weg zurückgezogen, so daß eine Vakuumkammer entsteht. Die Vakuumkammer und/oder der Formkörper werden dann evakuiert und in die von den Formhälften und dem Formkörper ausgebildete evakuierte Vakuumkammer und/oder den Formkörper selbst ein Gas eingelassen. Anschließend wird in der Vakuumkammer und/oder dem Formkörper das Plasma gezündet, so daß eine Beschichtung auf der Außen- und/oder Innenseite des Formkörpers abgeschieden wird. Nachdem die Beschichtung abgeschlossen wird, werden die Formhälften auseinandergezogen, so daß der Formkörper herausfällt. Diese Ausführungsform der Erfindung eignet sich nicht nur zur Innen- und Außenbeschichtung eines Hohlkörpers, sondern kann gleichermassen auch zur Außenbeschichtung eines Vollkörpers, wie zum Beispiel eines Gehäuseteiles oder von optischen Elementen, wie etwa einer optischen Linse oder einer transparenten Abdeckung, beispielsweise eine Display-Abdeckung verwendet werden.

In einer bevorzugten Ausführungsform der Erfindung werden zur elektrischen Isolierung in dem Bereich, in dem die beiden Formhälften in zusammengefahrenen Zustand zur Anlage kommen, eine Glimmer-, Quarz- oder Teflonschicht vorgesehen, damit ein Kurzschluß der beiden Formhälften beim Anlegen einer Spannung, beispielsweise zur Erzeugung eines HF-Feldes vermieden wird. Bevorzugt bildet eine Formhälfte des Formwerkzeuges die Kathode und eine Formhälfte des Formwerkzeuges die Anode aus. Neben einer Anregung mittels eines Hochfrequenz-Wechselfeldes ist es auch möglich, das Plasma mit Hilfe über Hohlleiterstrukturen eingekoppelten Mikrowellen zu zünden. Neben dem Verfahren stellt die Erfindung auch eine Vorrichtung zum gleichzeitigen Beschichten und Formen eines Körpers zur Verfügung.

Eine derartige Vorrichtung umfaßt ein Formwerkzeug zur Formung eines Formkörpers, eine Zuleitung für ein Spritzgut in die Form, eine Zuleitung zum Evakuieren der im Formwerkzeug ausgebildeten Vakuumkammer und/oder des Formkörpers sowie eine Zuleitung zum Zuführen von Gas in die Vakuumkammer und/oder den Formkörper und Mittel zum Zünden des in die Vakuumkammer und/oder dem Formkörper zugeführten Gases.

Die erfindungsgemäße Vorrichtung zum gleichzeitigen Sprießgießen und Beschichten ist nicht auf eine Vorrichtung umfassend zwei Formhälften beschränkt. Eine Ausführungsform mit zwei Formhälften, wie sie beim erfindungsgemäßen Verfahren zum Einsatz kommt, ist lediglich eine bevorzugte Ausführungsform.

Formkörper, die mit einer erfindungsgemäßen Vorrichtung hergestellt werden, umfassen eines oder mehrere der nachfolgenden Materialien:

Glas, polyzyklische Kohlenwasserstoffe, Polycarbonate, Polyethylenterphthalate, Polystyrol, Polyethylen, insbesondere HDPE, Polypropylen, Polymethylmetacrylat, PES. Insbesondere ist es möglich, polyzyklische Kohlenwasserstoffe, wie COC, die bereits selbst einen hochdichten Barrierekunststoff darstellen, derart zu beschichten, daß dieser hochdichte Barrierekunststoff vor einem Angriff durch organische Stoffe, insbesondere durch Fette geschützt wird.

In einer bevorzugten Ausführungsform weist die Barrierebeschichtung eine Dicke < 1000 nm, bevorzugt < 300 nm auf. Derartige Barriereschichten weisen neben guten Barriereeigenschaften auch eine hohe Flexibilität auf. Des weiteren können bei derartig dünnen Schichten insbesondere auch intrinsische Spannungen, die zu einem Abplatzen der Barriereschicht führen können, vermieden werden. In einer besonders bevorzugten Ausführungsform hat die Barriereschicht noch weitere zusätzliche Funktionen, beispielsweise optische oder elektrische Funktionen oder Antikratz- oder Antireflexfunktionen. Neben einer Barierewirkung gegen Gase und/oder Flüssigkeiten, insbesondere gegen O₂, CO₂, H₂O, Wasserdampf kann die Beschichtung auch eine Barrierefunktion gegen Fette und deren Spaltprodukte aufweisen, um beispielsweise empfindliche Kunststoffsubstrate zu schützen.

Durch das Zünden des Plasmas, beispielsweise mittels HF oder Mikrowelle, wird ein Plasma erzeugt, wodurch in den 3D-Formkörper oder den evakuierten Raum zwischen den Formhälften eingeleitete Precursor-Gase einer Gasatmosphäre reagieren und auf dem 3D-Formkörper eine Beschichtung abgeschieden wird. Transparente Schichten ergeben sich bei Verwendung nachfolgender Precursor-Materialien: HMDSN, HMDSO, PMS, Silan in N₂, TiCl₄ in einer Atmosphäre aus O₂, N₂, N₂+NH₃. Mit derartigen Materialien können TiO₂, SiO₂ sowie SiₓN_{y}-Schichten auf verschiedenen Kunststoffmaterialien abgeschieden werden. Eine TiO₂-Schicht wird beispielsweise bei Verwendung eines TiCl₄-Precursor-Gases in einer O₂-Atmosphäre abgeschieden, eine SiO₂-Barriereschicht aus einem HMDSN-Precursor-Gas in O₂-Atmosphäre, eine Si-N-Barriereschicht bei Verwendung eines SiH₄ bzw. TMS-Precursors in N₂+NH₃-Atmosphäre.

Die Erfindung betrifft ferner ein Verfahren zum gleichzeitigen Beschichten und Formen eines Körpers mit den Schritten:

Befüllung einer Form mit Schmelze, Ausdrücken überflüssiger Schmelze mittel Gas oder Flüssigkeit, Evakuierung des entstandenen Hohlkörpers, Befüllung des Hohlkörpers und eines den Körper umgebenden Behälters mit einem Gas und Zündung eines Plasmas in dem Formkörper und/oder Behältnis, so dass eine Beschichtung auf der Innenseite und/oder Außenseite des Formkörpers abgeschieden wird. Dieses erfindungsgemäße Verfahren ermöglicht wiederum das gleichzeitige Beschichten und Formen eines Körpers und ist auf den Gasinnendruckprozess ausgerichtet. Dabei wird zur Herstellung des Körpers Schmelze in eine Form gegossen. Die überschüssige Schmelze wird mittels eines Gases herausgedrückt, so dass ein Hohlkörper entsteht. Anstelle eines Gases ist auch eine Flüssigkeit denkbar. Anschließend wird der so entstandene Hohlkörper evakuiert und mit dem für die Beschichtung vorgesehenen Gas, bzw. Gasgemisch gefüllt. Denkbar ist auch, die überschüssige Schmelze schon mit dem für die Beschichtung vorgesehenen Gas, bzw. Gasgemisch herauszudrücken. Das Verfahren betrifft alle Ausführungsformen des Gasinnendruckprozesses, insbesondere das Ausblasverfahren, das Masserückdrückverfahren und das Kernzugverfahren. Solche Verfahren sind beispielsweise in "Gasinnendruckprozess ist mehr als eine Alternative", Klaus Rahnhöfer, Kunststoffberater 9/96, 24 - 27 beschrieben, dessen Offenbarung vollumfänglich auch zum Gegenstand der vorliegenden Erfindung gemacht wird.

Bevorzugt werden Mikrowellen für die Plasmaerzeugung verwendet. Besonders bevorzugt werden dabei Mikrowellen mit einer Frequenz von 2,45 GHz benutzt. Für bestimmte Anwendungen können jedoch auch niedrigere Frequenzen von Vorteil sein. Beispielsweise können Frequenzen im Hochfrequenz- oder Radiofrequenz-Bereich von Vorteil sein, wenn die Formteile der Vorrichtung als Abstrahlelemente benutzt werden, so daß sich zwischen diesen ein Wechselfeld aufbaut.

Bei einer Ausführungsform der Erfindung wird das Plasma durch eine Hochfrequenz-Wechselspannung, bevorzugt mit 13,56 MHz gezündet. Die Frequenz von 13,56 MHz ist in Deutschland postalisch zugelassen und daher zu bevorzugen.

Gemäß einer Weiterbildung der Erfindung wird die HF-Wechselspannung oder die Mikrowellen mittels einer im Hohlkörper plazierten Antenne eingebracht. Auf diese Weise wird im Hohlkörper ein im wesentlichen zylindersymmetrisches Feld erzeugt. Damit kann eine gleichmäßige Beschichtung erreicht werden.

Bevorzugt werden weiterhin die Mikrowellen oder die Hochfrequenz-Wechselspannung gepulst. Auf diese Weise wird die Wärmebelastung des zu beschichtenden Substrats verringert und insbesondere zwischen den Pulsen ein Gasaustausch ermöglicht, so daß sich mit gepulsten Feldern besonders saubere Beschichtungen herstellen lassen.

Bei noch einer Weiterbildung der Erfindung werden die eingebrachte Wechselspannung und/oder die eingebrachten Mikrowellen so gesteuert, dass im wesentlichen, entsprechend der dort höheren Feldintensität nur an der Wand des Körpers eine Beschichtung entsteht. Dies ist mit einer in der Mitte des Körpers plazierten Antenne möglich, bei der die von der HF-Wechselspannung erzeugte Feldstärke radial abnimmt. So lässt sich die Gasentladung so steuern, dass nur an der Innen- und oder Außenseite des Hohlkörpers eine Beschichtung entsteht. Dies hat den Vorteil, dass die Anlage nicht durch die Beschichtung verunreinigt wird.

Bei einer zweckmäßigen Ausführungsform der Erfindung weist das Formwerkzeug zumindest ein Auswerfelement auf, das seinerseits einen Kanal zur Einbringung von Prozessgas und/oder Mikrowellen beinhaltet. Auswerfelemente werden in der Spritzgusstechnik verwendet, um das hergestellte Teil, welches möglicherweise an der Form oder der Halterung hängen bleibt, auszuwerfen. Bei dem erfindungsgemäßen Auswerfelement ist ein Kanal vorgesehen, durch den Prozessgas und/oder Mikrowellen eingebracht werden können. So können zur Beschichtung notwendige Bauteile in ein bestehendes Bauteil einer Anlage zum Spritzgießen integriert werden.

Bei einer zweckmäßigen Ausführungsform der Erfindung weist das Formwerkzeug zumindest ein Fenster, bevorzugt Glasfenster, zur Einkopplung der HF- und/oder Mikrowellenenergie auf.

Die Erfindung soll nachfolgend anhand der Ausführungsbeispiele und der Figuren näher erläutert werden.

Es zeigen:
Figur 1: die zwei Formhälften des Formwerkzeuges des Formwerkzeuges in auseinandergezogener Stellung
Figur 2: das Formwerkzeug in auseinandergefahrener Stellung, so daß eine Vakuumkammer entsteht
Figur 3: eine alternative Ausführungsform zu einer Anordnung gemäß Figur 1, bei der die Anregung des Plasmas mit Hilfe von Mikrowellenenergie erfolgt
Figur 4: eine schematische Darstellung einer Ausführungsform mit einer Antenne, die zum Einbringen von HF-Wechselspannung in den Hohlkörper eingebracht wird.
Figur 5: eine schematische Darstellung einer Ausführungsform mit Auswerfelementen, die einen Kanal zur Einbringung von Prozessgas aufweisen.
Figur 6: eine Ausführungsform mit Einkopplung von Mikrowellen durch ein dielektrisches Fenster.

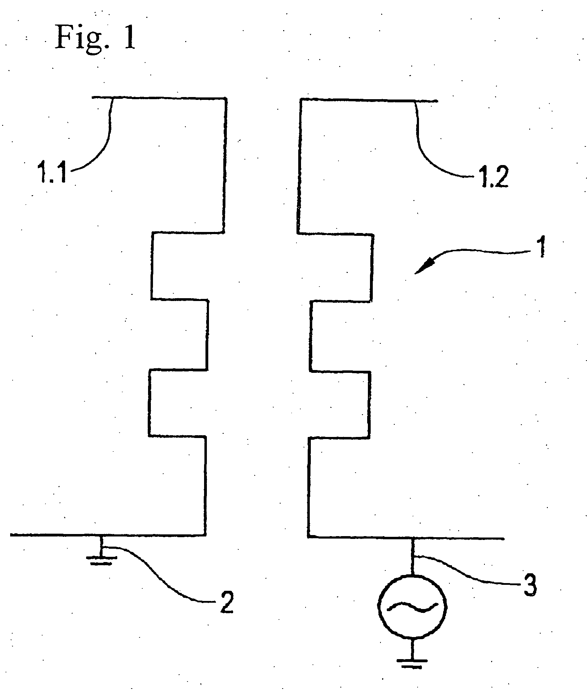

In Figur 1 ist ein Formwerkzeug 1 gemäß der Erfindung gezeigt, daß zwei Formhälften 1.1 sowie 1.2 umfaßt. Wird bei einer Ausführungsform der Erfindung zur Anregung des Plasmas die eine Formhälfte 1.1 des Formwerkzeuges als Anode geschaltet und Erdpotential 2 gelegt wird die andere Formhälfte als Kathode geschaltet, an die ein Hochfrequenz-Wechselfeld 3 angelegt werden kann.

In einem ersten Verfahrensschritt werden die beiden Formhälften 1.1 und 1.2 aneinandergefahren, so daß sie im oberen Bereich 5 miteinander zur Anlage kommen und im unteren Bereich 7 des Formwerkzeuges 1 ein Kanal 8 ausgebildet wird, in den Spritzgut, beispielsweise ein Kunststoffmaterial wie Polyethylen etc., eingeleitet wird. Damit bei Anliegen einer Wechselspannung zur Erzeugung eines Plasmas ein Kurzschluß zwischen den Formhälften vermieden wird, ist im oberen Bereich 5 der Formhälfte, in der die Formhälften miteinander zur Anlage kommen, ein elektrisches Isolatormaterial, wie beispielsweise Glimmer, Quarz oder Teflon, aufgebracht.

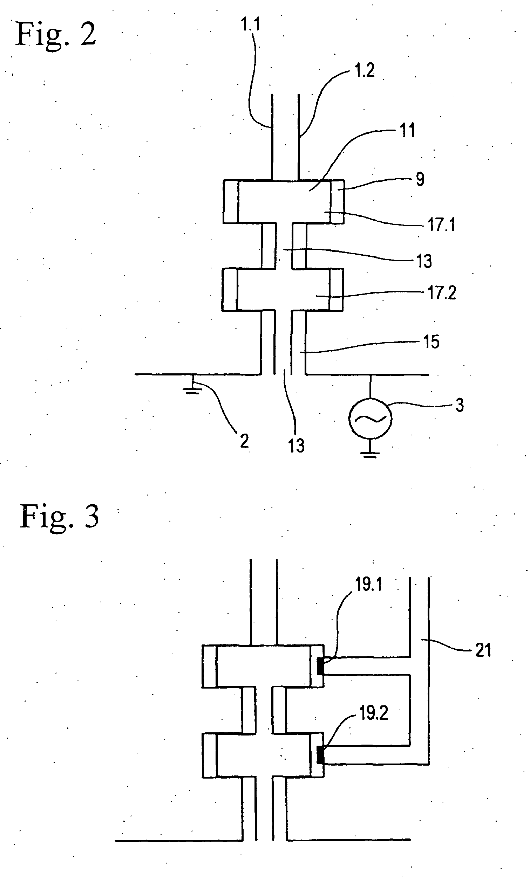

Nachdem das Spritzgut in die zusammengefahrenen Formhälften 1.1, 1.2 eingebracht und ein Kunststoff-Formkörper ausgebildet wurde, werden in einer ersten Ausführungsform der Erfindung, die auch eine Außenbeschichtung des Formkörpers erlaubt, die Formhälften 1.1 und 1.2 wie in Figur 2.gezeigt, um einen vorbestimmten Weg x auseinandergezogen. Auf diese Art und Weise entsteht um den Formkörper herum eine Vakuumkammer 9. Natürlich bildet der Formkörper 11 selbst ebenfalls eine Vakuumkammer. Als Zuleitung in das Innere der Formkörper selbst dient das Angußstück 13 der Formteile im Einlaßabschnitt 7. Um das Angußstück herum wiederum wird ein weiterer Raum 15 freigegeben, der als Einlaß für Gase bzw. eine Gasatmosphäre in den Vakuumraum 9 verwendet werden kann.

Um eine Innenbeschichtung zu erzielen, wird ein Gasgemisch, bestehend aus einem Atmosphärengas sowie einem Precursorgas, über das Angußstück 13 in das Innere der Formkörper geleitet. Die Precursorgase können HMDSN, HMDSO, TMS, Silan in N₂, TiCl₄ umfassen. Als Gasatmosphäre ist eine O₂-Atmosphäre, eine N₂-Atmosphäre oder eine N₂+NH₃-Atmosphäre denkbar.

Neben einer Einleitung derartiger Gase in das Innere der hier beispielhaft gezeigten zwei Formkörper 17.1 und 17.2 kann auch der durch das Wegziehen der Formteile geschaffene Raum 9, der sich außerhalb der Formkörper befindet, mit einer Gasatmosphäre und einem Precursorgas befüllt werden. Wird nunmehr an die Wechselspannungsquelle 3, wie in Figur 1 gezeigt, eine Hochfrequenz-Wechselspannung angelegt, so wird im Innenraum und, falls sich auch Gas und Precursor-Gas im Raum 9 befindet, und Raum außerhalb der Formteile ein Plasma gezündet. Das Plasma kann ein gepulstes Plasma sein oder ein kontinuierliches. Betreffend gepulste Plasmen, die sogenannten PICVD-Beschichtungsverfahren zugrundeliegen, wird auf die DE 38 30 249 C2 verwiesen, deren Offenbarungsgehalt vollumfänglich in die vorliegende Anmeldung mit aufgenommen wird. Mit Hilfe des kontinuierlichen oder eines gepulsten Plasmas wird der Behälter innen und optional außenseitig mit einer Beschichtung, wie beispielsweise einer SiOₓ-, einer TiOₓ-, einer SNOₓ- oder einer SiₓN_{y}-Beschichtung, bevorzugt mit einer Dicke im Bereich 10 - 1000 nm, versehen. Die auf den Kunststoff-Formkörper aufgebrachte Beschichtung kann als Barrierebeschichtung, beispielsweise einer Sauerstoff-Barrierebeschichtung, dienen.

Nachdem der Formkörper beschichtet ist, wird die Form vollständig auseinandergezogen und die Formteile aus dem Formkörper entfernt.

Alternativ zu einer Beschichtung mit Hochfrequenz (HF)-Energie wäre auch das Zünden des Plasmas mit Hilfe von Mikrowellenenergie möglich. Eine Vorrichtung für eine derartige Beschichtung ist in Figur 3 gezeigt.

Gleiche Bauteile wie in Figur 2 sind mit denselben Bezugsziffern belegt. Die Einkopplung der Mikrowellenenergie geschieht von der Seite der Formhälfte 1.2 über die elektrischen Fenster 19.1, 19.2 einer Halbleiterstruktur 21 oder aber Antennenstrukturen.

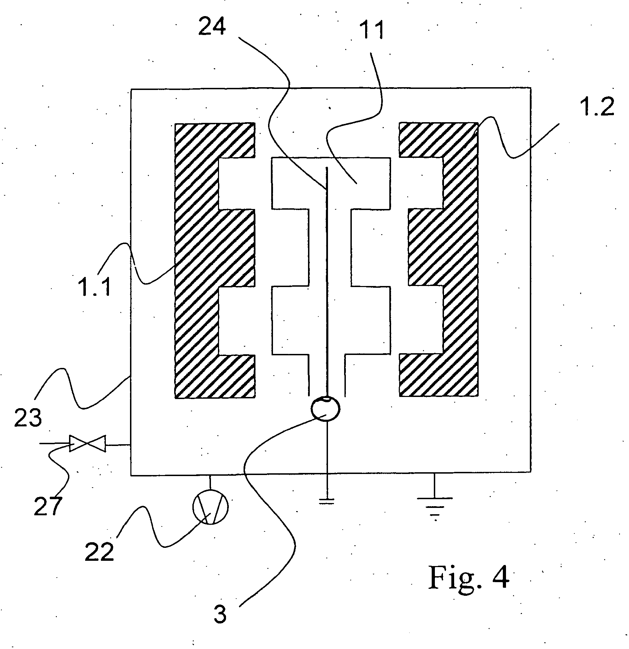

Fig. 4 zeigt eine schematische Darstellung einer Ausführungsform mit einer Antenne 24 zum Einbringen von HF-Wechselspannung in den Hohlkörper. Der Formkörper 11 wird hergestellt, indem in die Form 24 eine flüssige Schmelze eingebracht wird. Überflüssige Schmelze wird heraus gelassen oder durch Einbringen eines Gases oder einer Flüssigkeit herausgedrückt. So entsteht durch die folgende Abkühlung ein Hohlkörper 11. Anschließend kann die Form 1.1,1.2 vom Körper 11 weggefahren werden. Ein Behälter 23, der Körper 11 und Form 22 umschließt, kann mittels einer Pumpe 22 evakuiert über ein Ventil 27 wieder befüllt werden. So wird ein Gas in den Behälter eingebracht. Durch Zündung eines Plasmas durch eine an die Antenne 24 angelegte Wechselspannung 3 kann der Körper 11 beschichtet werden. Infolge des im wesentlichen radial von innen nach außen abnehmenden Feldes ist es möglich, die Plasmabildung so zu steuern, dass nur an Innenseite und/oder Außenseite des Körpers 11 eine Beschichtung entsteht, während die Form 1.2,1.2 geringfügig oder gar nicht durch die Beschichtung verunreinigt wird.

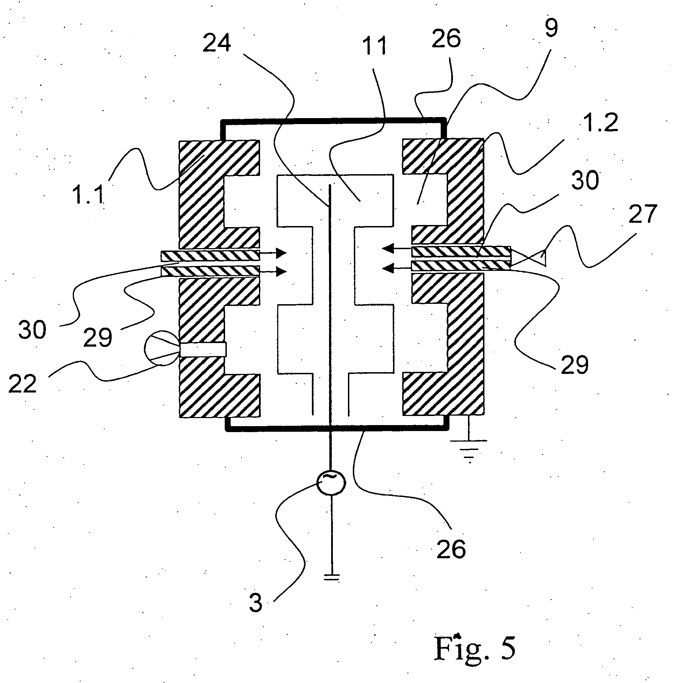

Fig. 5 zeigt eine schematische Darstellung einer Ausführungsform der erfindungsgemäßen Vorrichtung mit Auswerfelementen, die einen Kanal zur Einbringung von Prozessgas aufweisen.

In das Formwerkzeug 1.1,1.2 sind zwei Auswerfelemente 29 integriert. Zum Auswerfen des Formkörpers 11 sind die Auswerfelemente 29 nach innen bewegbar. Mittels einer Pumpe 22 kann die Vakuumkammer 9 evakuiert und bei der Beschichtung anfallendes Prozeßgas abgepumpt werden. Mittels eines Ventils 27, welches an eines der Auswerfelemente 29 angeschlossen ist, kann Prozeßgas für eine Außenbeschichtung eingelassen werden. Die Vakuumkammer 9 wird durch ein oder mehrere umlaufende Dichtungselemente 26 verschlossen. Die Zündung des Plasmas erfolgt wie bei dem Ausführungsbeispiel nach Fig. 4 durch Anlegen einer HF-Wechselspannung 3 an eine in den Formkörper 11 geführten Antenne 24. Bei einer alternativen Ausführungsform ist es auch denkbar, die Kanäle 30 in den Auswurfelementen 29 zur Einbringung von Mikrowellen zu nutzen und so das Plasma zu zünden.

Die Antenne 24 kann in geeigneter Ausführung auch als Gaslanze dienen, um Prozeßgas in den Hohlkörper einzuführen. Außerdem kann bei einer für Streckblasen von Hohlkörpern geeigneten Vorrichtung die Antenne gleichzeitig als Strecklanze dienen.

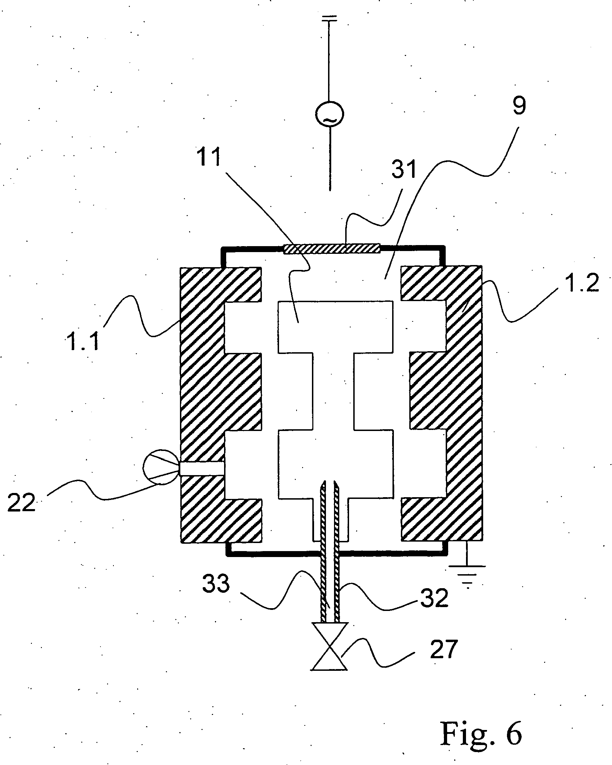

In Fig. 6 ist eine Variante der in Fig. 5 gezeigten Ausführungsform einer erfindungsgemäßen Vorrichtung dargestellt. Bei dieser Ausführungsform erfolgt die Einkopplung von Mikrowellen in die Vakuumkammer 9, die aus den Formhälften 1.1 und 1.2, sowie dem Dichtungselement 26 gebildet wird, durch ein dielektrisches Fenster 31, welches am Dichtungselement 26 angeordnet ist.

Mittels einer Gaslanze 32 und einem daran angeschlossenen Ventil 27 wird Prozeßgas für eine Innenbeschichtung des Hohlkörpers 11 in dessen evakuierten Innenraum geleitet, wobei im Inneren des Hohlkörpers unter Einwirkung gepulster Mikrowellen, die durch das dielektrische Fenster 31 in den evakuierten Bereich zwischen den Formhälften 1.1 und 1.2 geleitet werden, ein gepulstes Plasma erzeugt wird, wobei die Reaktionsprodukte des Plasmas auf der Innenoberfläche des Hohlkörpers eine Beschichtung erzeugen.

Auch hier kann die Gaslanze gleichzeitig als Strecklanze für eine entsprechend ausgebildete Vorrichtung zur Herstellung spritzstreckgeblasener Hohlkörper dienen.

Mit der erfindungsgemäßen Vorrichtung bzw. dem erfindungsgemäßen Verfahren ist es möglich, gleichzeitig einen Kunststoffkörper beliebiger Form herzustellen und zu beschichten. Der Vorteil einer derartigen Vorgehensweise ist insbesondere die effiziente Herstellung beschichteter Formkörper. Im Gegensatz zur Spritzblastechnik gemäß der WO 99/17334 können mit dem erfindungsgemäßen Verfahren bzw. der erfindungsgemäßen Vorrichtung auch komplexe Formteile durch Spritzguß hergestellt werden. Des weiteren ist es möglich, die Formhälften des Formwerkzeuges, nachdem die Formteile entnommen sind, mit Hilfe eines Plasmas zu reinigen.

## Patentansprüche

1. Verfahren zum gleichzeitigen Beschichten und Formen eines Körpers (11) umfassend die folgenden Schritte:
zwei Formhälften (1.1, 1.2) eines Formwerkzeuges (1) zur Formung eines Formkörpers (11) werden zusammengefahren und zur Anlage gebracht, wobei die Formhälften (1.1, 1.2) vorzugsweise spannungsfest elektrisch voneinander isoliert sind,
in die Formhälften (1.1, 1.2) wird ein Spritzgut eingeleitet, so daß ein Formkörper (11) entsteht,
die Formhälften (1.1, 1.2) werden einen vorbestimmten Weg zurückgefahren, so daß eine Vakuumkammer entsteht, die Vakuumkammer und der Formkörper (11) werden evakuiert,
in die von den Formhälften (1.1, 1.2) und dem Formkörper (11) ausgebildete, evakuierte Vakuumkammer und/oder den Formkörper (11) wird ein Gas eingelassen
das Plasma in der Vakuumkammer und/oder dem Formkörper (11) wird gezündet, so daß
eine Beschichtung auf der Außen- und/oder Innenseite des Formkörpers (11) abgeschieden wird.

2. Verfahren nach Anspruch 1, **dadurch gekennzeichnet, daß** nachdem die Beschichtung abgeschlossen ist, die Formhälften (1.1, 1.2) auseinandergefahren werden, so daß der Formkörper herausfällt.

3. Verfahren nach Anspruch 1 oder 2, **dadurch**
**gekennzeichnet, daß**
die Formhälften (1.1, 1.2) in dem Bereich (5), in dem sie zur Anlage kommen, durch einen spannungsfesten Überzug elektrisch voneinander isoliert sind, wobei der spannungsfeste Überzug insbesondere eine Glimmer-, eine Quarz- oder eine Teflonschicht umfasst, so daß kein Kurzschluß beim Zusammenfahren der Formhälften (1.1, 1.2) auftritt.

4. Verfahren nach Anspruch 3, **dadurch gekennzeichnet, daß** eine Formhälfte (12) die Kathode und eine Formhälfte (1.1) die Anode ausbildet.

5. Verfahren nach einem der Ansprüche 1 bis 4, **dadurch**
**gekennzeichnet, daß**
das Plasma mit Hilfe von bevorzugt über Hohlleiterstrukturen (21) eingekoppelten Mikrowellen, insbesondere mit einer Frequenz von 2,45GHz gezündet wird.

6. Verfahren nach einem der Ansprüche 1 bis 5, **dadurch**
**gekennzeichnet, daß**
das Plasma durch eingekoppelte Mikrowellen gezündet wird.

7. Verfahren nach einem der Ansprüche 1 bis 6, **dadurch gekennzeichnet, daß** das Plasma durch eine Hochfrequenz-Wechselspannung, bevorzugt mit 13,56 MHz, gezündet wird.

8. Verfahren nach Anspruch 6 oder 7, **dadurch gekennzeichnet, daß** die Mikrowellen oder die Hochfrequenz-Wechselspannung gepulst wird.

9. Verfahren nach Anspruch 6, 7 oder 8, wobei der geformte Körper (11) einen Hohlkörper umfaßt,
**dadurch gekennzeichnet, dass** die HF-Wechselspannung oder die Mikrowellen mittels einer im Hohlkörper plazierten Antenne (24) eingebracht wird.

10. Verfahren nach einem der Ansprüche 1 bis 9,
**dadurch gekennzeichnet, dass**
die eingebrachte Wechselspannung und/oder die eingebrachten Mikrowellen so gesteuert werden, dass nur an Innen- und/oder Außenwand des Körpers (11) eine Beschichtung entsteht.

11. Verfahren nach einem der Ansprüche 1 bis 10,
**dadurch gekennzeichnet, dass**
der Hohlkörper beim Blasformen mittels einer Strecklanze (32) gestreckt wird und der Hohlkörpers durch einen in der Strecklanze angeordneten Kanal mit Gas befüllt wird.

12. Verfahren nach einem der Ansprüche 1 bis 11, **dadurch**
**gekennzeichnet, daß**
das Gas eine Gasatmosphäre mit einem Precursor-Gas umfaßt.

13. Verfahren nach Anspruch 12, **dadurch gekennzeichnet, daß** das Precursor-Gas eine oder mehrere der nachfolgenden Substanzen umfasst:
HMDSN,
HMDSO,
TMS,
Silan in N₂
TiCl₄.

14. Verfahren nach einem der Ansprüche 1 bis 13, **dadurch gekennzeichnet, daß** das Gas eine O₂-Atmosphäre, und/oder eine N₂-Atmosphäre, und/oder
eine N₂+NH₃-Atmosphäre umfaßt.

15. Verfahren zum gleichzeitigen Beschichten und Formen eines Körpers (11), umfassend die folgenden Schritte:
Befüllung einer aus Formteilen (1.1, 1.2) zusammengefügten Form mit Schmelze;
vorzugsweise Ausdrücken überflüssiger Schmelze mittels Gas oder Flüssigkeit;
Wegfahren der Formteile (1.1, 1.2) von einem in der Form gebildeten Hohlkörper (11),
Evakuierung des Hohlkörpers (11) und eines den Hohlkörper umschließenden Behälters;
Befüllung des Hohlkörpers und/oder des Behälters mit einem. Gas; Zündung eines Plasmas in dem Hohlkörper (11) und/oder dem Behälter, und Beschichten auf der Innenseite und/oder Außenseite des Höhlkörpers (11).

16. Vorrichtung zum gleichzeitigen Beschichten und Formen eines Körpers, umfassend
- ein Formwerkzeug (1) mit zwei Formhälften (1.1, 1.2), zur Formung eines Formkörpers, welche einen vorbestimmten Weg zurückfahrbar sind, so daß eine Vakuumkammer entsteht,
- eine Zuleitung für ein Spritzgut,
- eine Zuleitung zum Evakuieren der im Formwerkzeug (1) ausgebildeten Vakuumkammer und des Formkörpers (11),
- eine Zuleitung zum Zuführen von Gas in die Vakuumkammer (9) und/oder den Formkörper (11),
- Einrichtungen zum Zünden des in die Vakuumkammer (9) und/oder den Formkörper (11) zugeführten Gases.

17. Vorrichtung nach Anspruch 16, **dadurch gekennzeichnet, daß** die Einrichtungen zum Zünden Einrichtungen zum Erzeugen von HF-Energie und/oder Mikrowellenenergie umfassen.

18. Vorrichtung nach Anspruch 16 oder 17, **dadurch gekennzeichnet, dass** das Formwerkzeug (1) zumindest ein Auswerfelement (29) aufweist, das seinerseits zumindest einen Kanal (27) zur Einbringung von Prozessgas und/oder Mikrowellen aufweist.

19. Vorrichtung nach einem der Ansprüche 16 bis 18, **dadurch gekennzeichnet, dass** das Formwerkzeug (1) zumindest ein dielektrisches Fenster, bevorzugt ein Glasfenster, zur Einkopplung der HF- und/oder Mikrowellen aufweist.

## Claims

1. Method for simultaneous coating and moulding of a body (11), comprising the following steps:
two mould halves (1.1, 1.2) of a moulding tool (1) for the moulding of a moulded body (11) are moved together and brought into abutment, whereby the mould halves (1.1, 1.2) are preferably electrically insulated in relation to each other in a voltage-proof way,
an injected material is introduced into the mould halves (1.1, 1.2) so that a moulded body (11) is produced,
the mould halves (1.1, 1.2) are moved back over a predetermined path so that a vacuum chamber is formed,
the vacuum chamber and the moulded body (11) are evacuated,
a gas is introduced into the evacuated vacuum chamber formed by the mould halves (1.1, 1.2) and the moulded body (11) and / or into the moulded body (11),
the plasma is ignited in the vacuum chamber and / or the moulded body (11) so that
a coating is deposited on the outer and / or inner side of the moulded body (11).

2. Method according to claim 1, **characterised in that**
after the coating has been completed, the mould halves (1.1, 1.2) are moved apart so that the moulded body falls out.

3. Method according to claim 1 or 2, **characterised in that**
the mould halves (1.1, 2.2), in the region (5) in which they are in abutment, are electrically insulated in relation to each other by a voltage-proof covering, whereby the voltage-proof covering includes in particular a mica, quartz or Teflon layer so that no short circuit occurs when moving the mould halves (1.1, 1.2) together.

4. Method according to claim 3, **characterised in that** one mould half (12) forms the cathode and one mould half (1.1) forms the anode.

5. Method according to one of the claims 1 to 4, **characterised in that**
the plasma, with the aid of microwaves preferably in-coupled via hollow conductor structures (21), is ignited particularly with a frequency of 2.45 GHz.

6. Method according to one of the claims 1 to 5, **characterised in that**
the plasma is ignited by in-coupled microwaves.

7. Method according to one of the claims 1 to 6, **characterised in that** the plasma is ignited by a highfrequency alternating voltage, preferably with 13.56 MHz.

8. Method according to claim 6 or 7, **characterised in that** the microwaves or the highfrequency alternating voltage is pulsed.

9. Method according to claim 6, 7 or 8, wherein the moulded body (11) includes a hollow body, **characterised in that** the HF alternating voltage or the microwaves are introduced by means of an antenna (24) placed in the hollow body.

10. Method according to one of the claims 1 to 9, **characterised in that**
the introduced alternating voltage and / or the introduced microwaves are controlled in such a way that a coating is only formed on the inner and / or outer wall of the body (11).

11. Method according to one of the claims 1 to 10, **characterised in that**
the hollow body is stretched during blow moulding by means of a stretching lance (32) and the hollow body is filled with gas through a duct arranged in the stretching lance.

12. Method according to one of the claims 1 to 11, **characterised in that**
the gas includes a gas atmosphere with a precursor gas.

13. Method according to claim 12,
**characterised in that**
the precursor gas includes one or more of the following substances:
HMDSN,
HMDSO,
TMS,
Silane in N₂,
TiCl₄.

14. Method according to one of the claims 1 to 13, **characterised in that** the gas includes an O₂ atmosphere and / or an N₂ atmosphere and / or an N₂+NH₃ atmosphere.

15. Method for simultaneous coating and moulding of a body (11), comprising the following steps:
filling of a mould put together from mould parts (1.1. , 1.2) with melt;
preferably pushing out of excess melt by means of gas or liquid;
moving away the mould parts (1.1, 1.2) from a hollow body (11) formed in the mould;
evacuation of the hollow body (11) and of a container surrounding the hollow body;
filling of the hollow body and / or the container with a gas; ignition of a plasma in the hollow body (11) and / or the container, and coating on the inner side and / or outer side of the hollow body (11).

16. Device for simultaneous coating and moulding of a body, comprising
- a moulding tool (1) with two mould halves (1.1, 1.2) for moulding a moulded body which can be moved back over a predetermined path so that a vacuum chamber is formed,
- a line for an injected material,
- a line for the evacuation of the vacuum chamber formed in the moulding tool (11) and of the moulded body (11),
- a line for the feeding of gas into the vacuum chamber (9) and / or into the moulded body (11),
- devices for igniting the gas fed into the vacuum chamber (9) and / or into the moulded body (11).

17. Device according to claim 16, **characterised in that** the devices for igniting include devices for generating HF energy and / or microwave energy.

18. Device according to claim 16 or 17, **characterised in that** the moulding tool (1) comprises at least one ejection element (29) which for its part comprises at least one duct (27) for the introduction of process gas and / or microwaves.

19. Device according to one of the claims 16 to 18, **characterised in that** the moulding tool (1) comprises at least one dielectric window, preferably a glass window, for in-coupling of the HF and / or microwaves.

## Revendications

1. Procédé de revêtement et de moulage simultanés d'un corps (11), comportant les étapes suivantes :
- deux moitiés de moule (1.1, 1.2) d'un outil de moulage (1) d'un corps moulé (11) sont assemblées et appliquées l'une contre l'autre, les moitiés de moule (1.1, 1.2) étant de préférence isolées électriquement à tension invariable l'une par rapport à l'autre,
- un matériau d'injection est introduit dans les moitiés de moule (1.1, 1.2), de façon à engendrer un corps moulé (11),
- les moitiés de moule (1.1, 1.2) sont reculées d'une distance prédéterminée, de façon à engendrer une chambre à vide,
- la chambre à vide et le corps moulé (11) sont mis sous vide,
- un gaz est admis dans la chambre à vide mise sous vide, formée par les moitiés de moule (1.1, 1.2) et le corps moulé (11), et/ou dans le corps moulé (11),
- le plasma dans la chambre à vide et/ou le corps moulé (11) est amorcé, de sorte que
- un revêtement soit déposé sur la face extérieure et/ou intérieure du corps moulé (11).

2. Procédé selon la revendication 1, **caractérisé en ce que** les moitiés de moule (1.1, 1.2) sont disjointes après le revêtement, de sorte que le corps moulé en tombe.

3. Procédé selon la revendication 1 ou 2, **caractérisé en ce que**, dans la zone (5) dans laquelle elles sont mises en application, les moitiés de moule (1.1, 1.2) sont isolées électriquement l'une de l'autre par un revêtement invariable en tension, le revêtement invariable en tension comprenant notamment une couche de mica, de quartz ou de Téflon, de façon à éviter un court-circuit lors de l'assemblage des moitiés de moule (1.1, 1.2).

4. Procédé selon la revendication 3, **caractérisé en ce qu'**une moitié de moule (12) constitue la cathode, et une moitié de moule (1.1) l'anode.

5. Procédé selon l'une des revendications 1 à 4, **caractérisé en ce que** le plasma est amorcé à l'aide de micro-ondes qui sont de préférence modulées par l'intermédiaire de structures à guides d'ondes (21), notamment à une fréquence de 2,45 GHz.

6. Procédé selon l'une des revendications 1 à 5, **caractérisé en ce que** le plasma est amorcé par des micro-ondes modulées.

7. Procédé selon l'une des revendications 1 à 6, **caractérisé en ce que** le plasma est amorcé par une tension alternative haute fréquence, de préférence à 13,56 MHz.

8. Procédé selon la revendication 6 ou 7, **caractérisé en ce que** les micro-ondes ou la tension alternative haute fréquence sont pulsées.

9. Procédé selon la revendication 6, 7 ou 8, dans lequel le corps moulé (11) est un corps creux,
**caractérisé en ce que** la tension alternative HF ou les micro-ondes sont introduites au moyen d'une antenne (24) placée dans le corps creux.

10. Procédé selon l'une des revendications 1 à 9, **caractérisé en ce que** la tension alternative introduite et/ou les micro-ondes introduites sont commandées de telle sorte qu'un revêtement ne soit engendré que sur la paroi intérieure et/ou la paroi extérieure du corps (11).

11. Procédé selon l'une des revendications 1 à 10, **caractérisé en ce que**, lors du moulage par soufflage, le corps creux est étiré au moyen d'une lance d'étirage (32), et **en ce que** le corps creux est rempli de gaz par un canal aménagé dans la lance d'étirage.

12. Procédé selon l'une des revendications 1 à 11, **caractérisé en ce que** le gaz comprend une atmosphère gazeuse avec un gaz précurseur.

13. Procédé selon la revendication 12, **caractérisé en ce que** le gaz précurseur contient une ou plusieurs des substances suivantes :
HMDSN,
HMDSO,
TMS,
silane dans du N₂,
TiCl₄.

14. Procédé selon l'une des revendications 1 à 13, **caractérisé en ce que** le gaz comprend une atmosphère de O₂ et/ou une atmosphère de N₂ et/ou une atmosphère de N₂+NH₃.

15. Procédé de revêtement et de moulage simultanés d'un corps (11), comportant les étapes suivantes :
- remplissage avec de la matière fondue d'un moule assemblé à partir de parties de moule (1.1, 1.2) ;
- de préférence expression de matière fondue excédentaire au moyen de gaz ou de liquide ;
- retrait des parties de moule (1.1, 1.2) d'un corps creux (11) formé dans le moule ;
- mise sous vide du corps creux (11) et d'une enceinte entourant le corps creux ;
- remplissage du corps creux et/ou de l'enceinte avec un gaz ; amorce d'un plasma dans le corps creux (11) et/ou dans l'enceinte, et revêtement de la face intérieure et/ou de la face extérieure du corps creux (11).

16. Dispositif de revêtement et de moulage simultanés d'un corps, comportant :
- un outil de moulage (1) avec deux moitiés de moule (1.1, 1.2) pour le moulage d'un corps moulé, lesquelles peuvent être reculées d'une distance prédéterminée de façon à engendrer une chambre à vide,
- une conduite d'amenée pour un matériau d'injection,
- une conduite d'amenée pour la mise sous vide de la chambre à vide formée dans l'outil de moulage (1) et du corps moulé (11),
- une conduite d'amenée pour l'admission de gaz dans la chambre à vide (9) et/ou dans le corps moulé (11),
- des systèmes pour l'amorçage du gaz admis dans la chambre à vide (9) et/ou dans le corps moulé (11).

17. Dispositif selon la revendication 16, **caractérisé en ce que** les systèmes d'amorçage comportent des systèmes pour la génération d'énergie HF et/ou d'énergie à micro-ondes.

18. Dispositif selon la revendication 16 ou 17, **caractérisé en ce que** l'outil de moulage (1) comporte au moins un élément d'éjection (29) qui, de son côté, comporte au moins un canal (27) pour l'admission de gaz de procédé et/ou de micro-ondes.

19. Dispositif selon l'une des revendications 16 à 18, **caractérisé en ce que** l'outil de moulage (1) comporte au moins une fenêtre diélectrique, de préférence une fenêtre en verre, pour la modulation de la HF et/ou de micro-ondes.
